# EUROPEAN PATENT SPECIFICATION

(11) **EP 3 229 649 B1**
(45) Date of publication and mention of the grant of the patent: **29.01.2020**
(21) Application number: 15825834.3
(22) Date of filing: 11.12.2015
(51) Int. Cl.: A47J 27/21

(54) **CONTAINER FOR HEATING LIQUIDS**
BEHÄLTER ZUR ERWÄRMUNG VON FLÜSSIGKEITEN
RÉCIPIENT DE CHAUFFAGE DE LIQUIDES

(30) Priority: 12.12.2014 IT UD20140189
(43) Date of publication of application: 18.10.2017
(73) Proprietor: De' Longhi Appliances S.r.l. Con Unico Socio, 31100 Treviso (IT)
(72) Inventor: DE' LONGHI, Giuseppe, I-31100 Treviso (IT)
(74) Representative: Petraz, Gilberto Luigi
(86) International application number: PCT/IB2015/059558
(87) International publication number: WO 2016/103098

(56) References cited:
- EP-A1- 1 504 701
- CN-U- 201 905 728
- CN-Y- 201 370 070
- GB-A- 2 299 014
- KR-Y1- 200 473 051

## Description

### FIELD OF THE INVENTION

The present invention concerns a container for heating liquids, in particular, but not only, for apparatuses for domestic use, that is, for use in communities such as hotels, schools, canteens etc.

In particular, the container for heating liquids consists of a container with a base body made of plastic material and personalized externally with finishings of a different plastic material from that of the base body and having a different behavior as the temperature varies.

### BACKGROUND OF THE INVENTION

Containers are known, used in the domestic field or also present in the rooms of hotels and communities in general, used in combination with little gas rings or plates to heat and boil a liquid, for example water, to prepare hot drinks such as tea, coffee, barley drinks or other.

Examples of such kettles are described for example in EP-1.504.701 and GB 2.299.014.

Such containers, or kettles, are particularly common in the English-speaking world, but are gaining ground in other countries too.

These containers or kettles, which were originally made mainly of metal material, in recent times have been made more and more frequently of plastic.

Furthermore, for the purposes of esthetic personalization, it is known to apply decorations, surrounding bands, ornaments or other embellishments on the base body, to make the kettle a high quality designer object.

For example, kettles are known with a base body made of polypropylene (PP) or polyethylene terephthalate (PET), on which decorations made of higher quality plastic material are applied, such as for example polycarbonate, polymethyl methacrylate (PMMA) or other suitable material. The choice of materials to be used can depend on various factors, including cost, mechanical properties, esthetic properties, workability, etc. For example, polypropylene is an easily moldable material, structurally resistant and relatively economical. For external decorations one material that can be used is polycarbonate, which has high resistance but also a certain fragility.

This coupling of different plastic materials creates problems during use, also given the function performed by such kettles; indeed it is known that different plastic materials put in contact with a source of heat are subject to different dilation for each type of plastic material.

For example, between polypropylene and polycarbonate there is a ratio between the respective thermal dilation coefficients of 2:1. Therefore, during use, the external body tends to dilate differently from the external decorations, and in the case of surrounding bands, these are subjected to stresses such as to cause first cracks and then even breakage.

The solution to this problem cannot be to leave circumferential plays between body and bands, because these would cause unwanted dripping and infiltrations.

Therefore, one disadvantage of containers or kettles for heating liquids made of plastic and decorated with overlying plastic material is that the plastic material located above the base body cannot be attached firmly, so as to prevent premature breakage at least of its attachment points.

Another problem is to solve the above disadvantage, surrounding the base body firmly, to prevent the boiling liquid from leaking into the space between the two plastic materials.

One purpose of the present invention is to obtain a kettle that provides to couple the base body made of plastic and surrounding bands or other decorations, also made of plastic, such as to overcome the disadvantages created by the different heat behavior of the two materials.

Another purpose of the present invention is to obtain a kettle that allows to surround the base body with decorations and bands of external plastic material adhering as much as possible to the base body.

Another purpose is to obtain a kettle that can satisfy esthetic requirements and at the same time the technical requirements of production.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a container configured to heat liquids according to the present invention comprises a base body and one or more decoration bands applied on the outside of the base body.

Hereafter in the present description we will speak generally of bands, meaning to include the case where only one band is present.

The base body is made of a first material, preferably plastic, for example but not only PP, PET or other suitable material, with a thermal dilation coefficient different from, in particular higher than that of a second material, also preferably plastic, that makes up the decoration bands.

According to a characteristic feature of the present invention, the decoration bands are substantially C-shaped, disposed wound around the surface of the base body, and the ends of the C are joined to each other, or to the base body, by elastic means.

In one formulation of the present invention, each decoration band covers the whole external circumference of the base body, except for the presence of the elastic means that connect the ends thereof, or connect them to the base body.

According to another formulation, two or more decoration bands cover part of the circumference of the base body and have their ends connected to each other by elastic means.

According to another formulation, one or more decoration bands cover the whole or part of the circumference of the base body and have their ends connected to the base body by elastic means.

In the framework of the present invention the elastic means comprise rubber tongues, springs, metal foils, extendable wires, or any other means suitable for the purpose.

Thanks to the elastic means, the decoration band can be made to adhere completely to the external surface of the base body, and the function of compensating the different thermal dilations of the two plastic materials when a hot liquid is present inside the base body is performed by the elastic means.

According to one formulation of the present invention, the elastic means of all the decoration bands are aligned to each other in a substantially vertical direction of the base body, creating a kind of hinge between all the bands with respect to the base body. In a variant, the elastic means of different decoration bands are misaligned with respect to each other.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a perspective view of a particular form of embodiment of a container for heating liquids according to the invention;
- fig. 2 is a rear view of a particular form of embodiment of a container for heating liquids according to the invention;
- fig. 3 is a lateral section view of a particular form of embodiment of a container for heating liquids according to the invention;
- fig. 4 is a view of the decoration bands removed from the base body.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

We shall now refer in detail to the various forms of embodiment of the present invention, of which one or more examples are shown in the attached drawings. Each example is supplied by way of illustration of the invention and shall not be understood as a limitation thereof.

According to the present description and with reference to the drawings from 1 to 4, the invention concerns a container for heating liquids 10, hereafter defined simply as container.

The container 10 can comprise a base body 11 made of plastic material. The plastic material is characterized by its thermal dilation coefficient.

In a particular form of embodiment, the base body 11 can have a shape such that its base 12 has a bigger diameter than its upper edge 13, so as to have a section with a size reducing from the bottom to the top.

Furthermore, the base body 11 can comprise a continuous lateral surface 14 able to form a base body 11 with a truncated cone shape, a simple taper or a lateral bulge. The base body 11 is advantageously but not necessarily made of polypropylene (PP) or PET or other suitable material.

The lateral surface 14 can comprise a hinge 22 functioning as a seating for a possible handle (not shown in the drawings) for a user to hold the container 10.

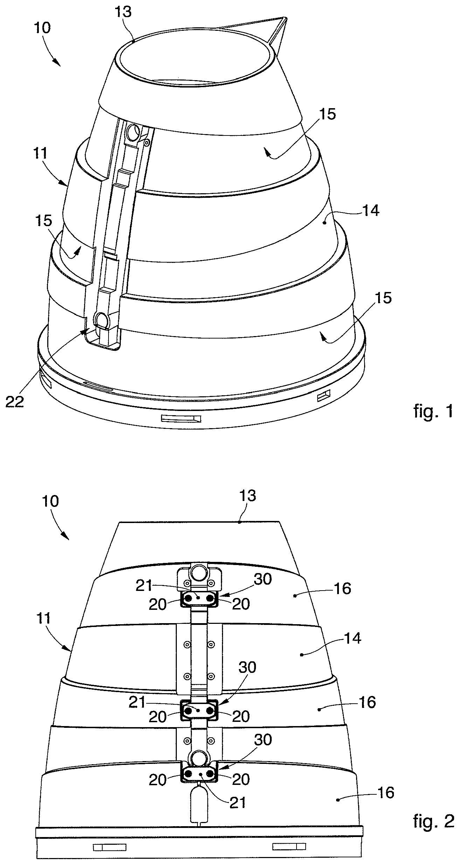

In a particular form of embodiment shown and visible in fig. 1, the lateral surface 14 can comprise recesses that function as seatings 15 (see fig. 1) for at least three decoration bands 16.

It is obvious that the number of decoration bands 16 can be different from three, and comprise one, two or more than four. It is also obvious that, even if the drawings show bands 16 that substantially surround the whole external circumference of the base body 11, the invention also concerns a solution, as will be indicated hereafter, in which the decoration band 16 does not completely surround the base body 11 but only a part of it.

In one form of embodiment, the decoration bands 16 can be made of a particular plastic material, different from that of the base body 11.

The plastic material of the decoration bands 16 generally has a thermal dilation coefficient different from, in particular less than, that of the plastic material of the base body 11.

The decoration bands 16 can be transparent or pigmented, or opaque or smooth or knurled. The decoration bands 16 can consist of two or more sections, with different finishing or color, and possibly different from the color of the base body 11. They can be for example made of polycarbonate, polymethyl methacrylate, or other suitable material.

In the solution shown here, the decoration bands 16 are configured substantially in a circular shape, so as to surround the base body 11 and adapt to the circumference of the lateral surface 14.

In another form of embodiment, each of the decoration bands 16 can comprise two end edges, respectively upper 18 and lower 19, parallel to each other or inclined in different combinations.

Forms of embodiment of the present invention provide that the decoration bands 16 are substantially C-shaped, defining at least a discontinuity 17 between their contiguous ends.

In particular, the decoration bands 16 in correspondence with their contiguous ends can comprise at least an elastic attachment element 30.

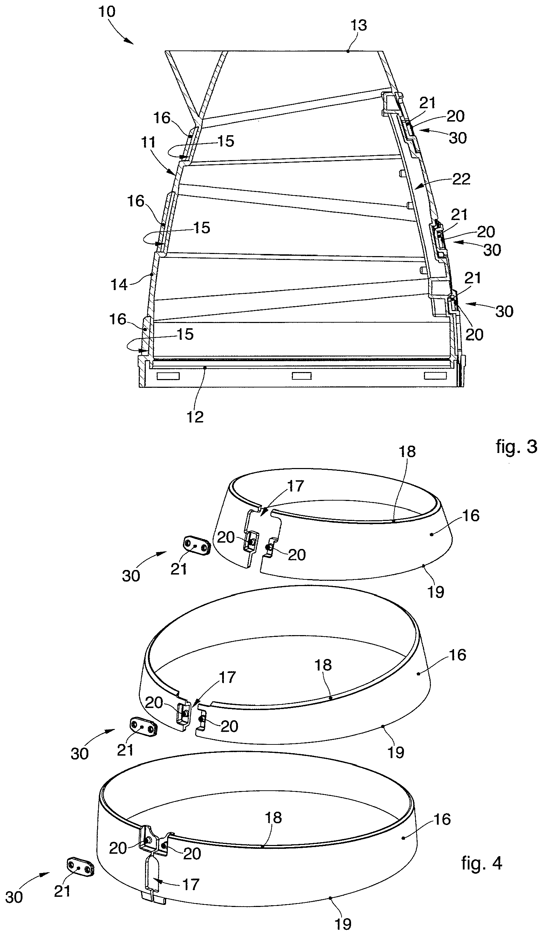

In the solution shown in particular in fig. 4, merely by way of non-restrictive example of the field of the invention, the elastic attachment element 30 comprises a pair of attachments 20, provided on respective contiguous ends of the decoration band 16, and a rubber tongue 21 attached to the two attachments 20.

The attachments 20 can be configured as extensions or holes of the decoration bands 16.

As an alternative to the attachments 20 and the rubber tongue 21, the elastic attachment element 30 can be made with a plastic joint, or a foil made of a particular metal alloy, or other elastic element suitable for the purpose. The elastic attachment element 30, in any form or structure whatsoever, allows to compensate the different behavior of thermal dilation of the two plastic materials, that of the base body 11 and that of the decoration bands 16. In particular, the elastic attachment element 30 allows the decoration bands 16 to adapt to the high thermal dilation of the base body 11 without causing cracks or fractures, and maintaining the adherence of the decoration bands 16 to the surface of the base body 11 for their whole extension, except in correspondence with the discontinuities 17.

In a particular form of embodiment, the discontinuities 17 are aligned in correspondence with the vertical axis of the hinge 22.

In relation to the forms of embodiment described above, the container 10 therefore allows two plastic materials to coexist, disposed one above the other and in close reciprocal adherence, which have different thermal dilation coefficients.

In fact, in the case shown here, the dilation of the plastic material of the base body 11 is greater than that of the plastic material of the decoration bands 16.

In addition, the thermal dilation of the plastic material of the base body 11 is assisted by the plastic material of the decoration bands 16 thanks to the elastic attachment elements 30.

The rubber tongues 21 confer elasticity on the decoration bands 16.

This form of embodiment allows a perfect adhesion of the decoration bands 16 to the base body 11, in order to prevent the liquid from leaking between the base body 11 and the decoration bands 16.

It is clear that modifications and/or additions of parts may be made to the container for liquids as described heretofore, without departing from the field and scope of the present invention as defined by the claims.

It is also clear that, although the present invention has been described with reference to some specific examples, a person of skill in the art shall certainly be able to achieve many other equivalent forms of container for heating liquids, having the characteristics as set forth in the claims and hence all coming within the field of protection defined thereby.

## Claims

1. Container for heating liquids, comprising a base body (11) made of a first material and one or more decoration bands (16) applied on the outside of the base body (11) and made of a second material with a different coefficient of thermal dilation from the first material, wherein the decoration bands (16) are substantially C-shaped disposed wound around the surface of the base body (11), and the ends of the C are joined to each other, or to the base body (11), by elastic means (30), wherein said base body (11) is made of a first plastic material **characterized in that** said decoration bands (16) are made of a second plastic material, and **in that** said first plastic material has a coefficient of thermal dilation higher than that of the second plastic material.

2. Container for heating liquids as in claim 1, **characterized in that** each decoration band (16) covers the whole external circumference of the base body (11), except for the presence of the elastic means (30) that connect the ends to each other or to the base body (11).

3. Container for heating liquids as in claim 1, **characterized in that** two or more decoration bands (16) cover part of the circumference of the base body and have their ends connected to each other, or to the base body (11), by elastic means (30).

4. Container for heating liquids as in any claim hereinbefore, **characterized in that** said elastic means (30) comprise one of either rubber tongues, springs, metal foils or extendable wires.

5. Container for heating liquids as in any claim hereinbefore, **characterized in that** the elastic means (30) of all the decoration bands (16) are aligned to each other in a substantially vertical direction of the base body (11).

6. Container for heating liquids as in any of the claims from 1 to 3, **characterized in that** said elastic means (30) of different decoration bands (16) are misaligned with respect to each other.

7. Container for heating liquids as in any claim hereinbefore, **characterized in that** said base body is made of PP, PET, or other suitable material and said decoration bands (16) are made of polycarbonate, polymethyl methacrylate (PMMA), or other suitable material.

8. Container for heating liquids as in any claim hereinbefore, **characterized in that** said base body (11) comprises a lateral surface (14) in which recesses are made that act as seatings (15) for respective decoration bands (16).

9. Container for heating liquids as in any claim hereinbefore, **characterized in that** said elastic means (30) comprise a pair of attachments (20), provided on respective contiguous ends of one decoration band (16), and a rubber tongue (21) attached to the two attachments (20).

10. Container for heating liquids as in any of the claims from 1 to 8, **characterized in that** said elastic means (30) comprise an elastic attachment of at least one end of one decoration band (16).

## Patentansprüche

1. Behälter zum Beheizen von Flüssigkeiten, aufweisend einen Basiskörper (11), der aus einem ersten Material gemacht ist, und ein oder mehrere Dekorationsbänder (16), die auf die Außenseite des Basiskörpers (11) aufgebracht sind und aus einem zweiten Material gemacht sind, das einen zu dem ersten Material unterschiedlichen Wärmedehnungskoeffizienten hat, wobei die Dekorationsbänder (16) im Wesentlichen C-förmig um die Fläche des Basiskörpers (11) herum gewunden angeordnet sind, wobei die Enden der C miteinander oder mit dem Basiskörper (11) verbunden sind durch elastische Mittel (30), wobei der Basiskörper (11) aus einem ersten Kunststoffmaterial gemacht ist, **dadurch gekennzeichnet, dass** die Dekorationsbänder (16) aus einem zweiten Kunststoffmaterial gemacht sind und dass das erste Kunststoffmaterial einen Wärmedehnungskoeffizienten hat, der größer ist als jener des zweiten Kunststoffmaterials.

2. Behälter zum Beheizen von Flüssigkeiten gemäß Anspruch 1, **dadurch gekennzeichnet, dass** jedes Dekorationsband (16) den ganzen Außenumfang des Basiskörpers (11) abdeckt ausgenommen die Präsenz der elastischen Mittel (30), die die Enden miteinander oder mit dem Basiskörper (11) verbinden.

3. Behälter zum Beheizen von Flüssigkeiten gemäß Anspruch 1, **dadurch gekennzeichnet, dass** zwei oder mehr Dekorationsbänder (16) einen Teil des Umfangs des Basiskörpers abdecken und ihre Enden miteinander oder mit dem Basiskörper (11) durch elastische Mittel (30) verbunden haben.

4. Behälter zum Beheizen von Flüssigkeiten gemäß irgendeinem vorhergehenden Anspruch, **dadurch gekennzeichnet, dass** die elastischen Mittel (30) eines von entweder Gummizungen, Federn, Metallfolien oder dehnbaren Drähten aufweisen.

5. Behälter zum Beheizen von Flüssigkeiten gemäß irgendeinem vorhergehenden Anspruch, **dadurch gekennzeichnet, dass** die elastischen Mittel (30) aller Dekorationsbänder (16) in einer im Wesentlichen vertikalen Richtung des Basiskörpers (11) zueinander ausgerichtet sind.

6. Behälter zum Beheizen von Flüssigkeiten gemäß irgendeinem der Ansprüche 1 bis 3, **dadurch gekennzeichnet, dass** die elastischen Mittel (30) unterschiedlicher Dekorationsbänder (16) zueinander nicht-ausgerichtet sind.

7. Behälter zum Beheizen von Flüssigkeiten gemäß irgendeinem vorhergehenden Anspruch, **dadurch gekennzeichnet, dass** der Basiskörper aus PP, PET oder einem andern geeigneten Material gemacht ist und die Dekorationsbänder (16) aus Polykarbonat, Polymethylmethacrylat (PMMA) oder einem anderen geeigneten Material gemacht sind.

8. Behälter zum Beheizen von Flüssigkeiten gemäß irgendeinem vorhergehenden Anspruch, **dadurch gekennzeichnet, dass** der Basiskörper (11) eine laterale Fläche (14) aufweist, in welcher Aussparungen ausgebildet sind, die als Sitze (15) für jeweilige Dekorationsbänder (16) dienen.

9. Behälter zum Beheizen von Flüssigkeiten gemäß irgendeinem vorhergehenden Anspruch, **dadurch gekennzeichnet, dass** die elastischen Mittel (30) aufweisen eine Paar Anbringer (20), die an jeweiligen angrenzenden Enden eines Dekorationsbands (16) bereitgestellt sind, und eine Gummizunge (21), die an den beiden Anbringern (20) angebracht ist.

10. Behälter zum Beheizen von Flüssigkeiten gemäß irgendeinem der Ansprüche 1 bis 8, **dadurch gekennzeichnet, dass** die elastischen Mittel (30) einen elastischen Anbringer von wenigstens einem Ende eines Dekorationsbands (16) aufweisen.

## Revendications

1. Contenant pour chauffer des liquides, comprenant un corps de base (11) constitué d'un premier matériau et une ou plusieurs bandes de décoration (16) appliquées sur l'extérieur du corps de base (11) et constituées d'un second matériau ayant un coefficient de dilatation thermique différent par rapport au premier matériau, dans lequel les bandes de décoration (16) sont sensiblement en forme de C et disposées enroulées autour de la surface du corps de base (11), et les extrémités du C sont reliées l'une à l'autre, ou au corps de base (11), par des moyens élastiques (30), dans lequel
ledit corps de base (11) est constitué d'une première matière plastique **caractérisé en ce que**
lesdites bandes de décoration (16) sont constituées d'une seconde matière plastique, et **en ce que**
ledit premier matériau plastique a un coefficient de dilatation thermique supérieur à celui de la seconde matière plastique.

2. Contenant pour chauffer des liquides selon la revendication 1, **caractérisé en ce que** chaque bande de décoration (16) recouvre la totalité de la circonférence externe du corps de base (11), à l'exception de la présence des moyens élastiques (30) qui relient les extrémités les unes aux autres ou au corps de base (11).

3. Contenant pour chauffer des liquides selon la revendication 1, **caractérisé en ce que** deux ou plusieurs bandes de décoration (16) recouvrent une partie de la circonférence du corps de base et ont leurs extrémités connectées les unes aux autres, ou au corps de base (11), par des moyens élastiques (30).

4. Contenant pour chauffer des liquides selon l'une quelconque des revendications précédentes, **caractérisé en ce que** lesdits moyens élastiques (30) comprennent un quelconque parmi des languettes en caoutchouc, des ressorts, des feuilles métalliques ou des fils extensibles.

5. Contenant pour chauffer des liquides selon l'une quelconque des revendications précédentes, **caractérisé en ce que** les moyens élastiques (30) de toutes les bandes de décoration (16) sont alignés les uns avec les autres dans une direction sensiblement verticale du corps de base (11).

6. Contenant pour chauffer des liquides selon l'une quelconque des revendications 1 à 3, **caractérisé en ce que** lesdits moyens élastiques (30) de différentes bandes de décoration (16) ne sont pas alignés les uns par rapport aux autres.

7. Contenant pour chauffer des liquides selon l'une quelconque des revendications précédentes, **caractérisé en ce que** ledit corps de base est en PP, PET ou en un autre matériau approprié, et **en ce que** lesdites bandes de décoration (16) sont en polycarbonate, en poly(méthacrylate de méthyle) (PMMA), ou en un autre matériau approprié.

8. Contenant pour chauffer des liquides selon l'une quelconque des revendications précédentes, **caractérisé en ce que** ledit corps de base (11) comprend une surface latérale (14) dans laquelle sont ménagés des évidements qui agissent comme des sièges (15) pour des bandes de décoration respectives (16).

9. Contenant pour chauffer des liquides selon l'une quelconque des revendications précédentes, **caractérisé en ce que** lesdits moyens élastiques (30) comprennent une paire d'attaches (20), prévues sur des extrémités contiguës respectives d'une bande de décoration (16), et une languette en caoutchouc (21) fixée au deux attaches (20).

10. Contenant pour chauffer des liquides selon l'une quelconque des revendications 1 à 8, **caractérisé en ce que** lesdits moyens élastiques (30) comprennent une attache élastique d'au moins une extrémité d'une bande de décoration (16).
